# EUROPÄISCHE PATENTSCHRIFT

(11) **EP 1 685 338 B1**
(45) Veröffentlichungstag und Bekanntmachung des Hinweises auf die Patenterteilung: **23.01.2008**
(21) Anmeldenummer: 04818761.1
(22) Anmeldetag: 09.11.2004
(51) Int. Cl.: F16H 25/22

(54) **ROLLENGEWINDETRIEB**
ROLLER THREAD GEAR
VIS D'ENTRAINEMENT A GALETS

(30) Priorität: 19.11.2003 DE 10354064
(43) Veröffentlichungstag der Anmeldung: 02.08.2006
(73) Patentinhaber: Schaeffler KG, 91074 Herzogenaurach (DE)
(72) Erfinder: OETJEN, Jürgen, 91074 Herzogenaurach (DE)
(86) Internationale Anmeldenummer: PCT/EP2004/012639
(87) Internationale Veröffentlichungsnummer: WO 2005/050063

(56) Entgegenhaltungen:
- WO-A1-03/072966
- DE-A1- 10 109 505
- US-A- 1 367 499
- US-A- 2 938 400
- PATENT ABSTRACTS OF JAPAN Bd. 1995, Nr. 06, 31. Juli 1995 (1995-07-31) & JP 07 077261 A (KOYO MACH IND CO LTD), 20. März 1995 (1995-03-20) in der Anmeldung erwähnt

## Beschreibung

Die vorliegende Erfindung betrifft einen Rollengewindetrieb, bei dem eine Spindelmutter auf einer Gewindespindel drehbar angeordnet ist entsprechend dem Oberbegriff des Anspruches 1 und wie er aus der DE 10109505A bekannt ist. Derartige Rollengewindetriebe wandeln eine relative Drehbewegung zwischen der Gewindespindel und der Spindelmutter in eine translatorische Bewegung zwischen der Gewindespindel und der Spindelmutter um.

Aus JP 07-077261 A beispielsweise ist ein Rollengewindetrieb bekannt geworden, bei dem die Rollen in einer Gewindebahn abrollbar angeordnet sind, wobei die Gewindebahn von an der Gewindespindel und an der Spindelmutter vorgesehenen Gewindenuten begrenzt ist. Die Spindelmutter ist zweiteilig ausgeführt, wobei eine Teilungsebene quer zur Drehachse der Gewindespindel angeordnet ist. Zwischen dem ersten Mutterteil und der Gewindespindel ist ein erster Rollensatz angeordnet, und zwischen dem zweiten Mutterteil und der Gewindespindel ist ein zweiter Rollensatz angeordnet. Die Rollen des ersten Rollensatzes wälzen in einer ersten Gewindebahn ab, die von an der Gewindespindel und an dem ersten Mutterteil vorgesehenen Gewindenuten gebildet ist. Die Rollen des zweiten Rollensatzes wälzen an einer zweiten Gewindebahn ab, die von an der Gewindespindel und an dem zweiten Mutterteil gebildeten Gewindenuten gebildet ist. Jede Gewindenut ist von zwei Gewindeflanken begrenzt. Die Rollen wälzen an einander zugewandten Gewindeflanken der Gewindenut der Gewindespindel und der Gewindenut des jeweiligen Mutterteiles ab. Die Drehachsen der Rollen des ersten Rollensatzes und die Drehachsen der Rollen des zweiten Rollensatzes stehen etwa rechtwinklig aufeinander. Zwischen den beiden Mutterteilen ist ein Abstandhalter vorgesehen, der die beiden Mutterteile in axialem Abstand zueinander hält.

Zwischen dem Innenumfang der Spindelmutter und dem Außenumfang der Gewindespindel ist ein ringförmiger Spalt ausgebildet, der von den beiden Wälzkörpersätzen durchbrochen wird. Für eine einwandfreie Schmierung des Rollengewindetriebes ist es angebracht, in diesen ringförmigen Spalt Schmiermittel einzubringen. Da dieser ringförmige Spalt jedoch nur gering ist, kann auch nur eine geringe Menge an Schmiermittel eingebracht werden. Es besteht auch mangels Platz nicht die Möglichkeit, Schmiermittel in den Bereich der Gewindebahn einzubringen. Aus diesem Grund kann ein kurzes Schmierintervall erforderlich sein.

Aufgabe der vorliegenden Erfindung ist es, einen Rollengewindetrieb nach den Merkmalen des Oberbegriffs des Anspruchs 1 anzugeben, bei dem dieser Nachteil behoben ist.

Erfindungsgemäß wird diese Aufgabe mit den Merkmalen des Anspruches 1 gelöst. In anderen Worten ausgedrückt liegt die Erfindung darin, dass die Gewindeflanken der Gewindenut länger als die Rollen ausgebildet sind, wobei zwischen Stirnseiten der Rollen und diesen Stirnseiten gegenüberliegenden Gewindeflanken ein Freiraum gebildet ist. Dieser so gebildete Freiraum steht als zusätzliches Schmiermittelreservoir zur Verfügung.

Bei dem aus dem oben erwähnten Dokument bekannten Rollengewindetrieb sind einander benachbart angeordnete Rollen mit ihrer Wälzfläche in Wälzkontakt. Das bedeutet eine erhöhte Reibung. Bei dem erfindungsgemäßen Rollengewindetrieb ist es möglich, einen Käfig zum Führen der Rollen vorzusehen, in dessen Taschen Rollen aufgenommen sind, wobei der Käfig Gurte und diese Gurte miteinander verbindende Stege aufweist. Der Vorteil besteht darin, dass die Gurte des Käfigs in dem erfindungsgemäßen Freiraum angeordnet sein können. Die Stege und der Freiraum winden sich schraubenförmig um die Drehachse des Rollengewindetriebes. Die zueinander beabstandet angeordneten Gurte des Käfigs spannen eine Ebene auf, wobei die Rotationsachsen der Rollen parallel zu dieser Ebene und quer zu den Gurten angeordnet sind.

Der erfindungsgemäße Rollengewindetrieb kann ebenso wie der bekannte Rollengewindetrieb eine zweiteilig ausgeführte Spindelmutter aufweisen, wobei ein aus Rollen gebildeter erster Rollensatz in einer ersten Gewindebahn und ein zweiter Rollensatz in einer zweiten Gewindebahn abwälzbar angeordnet sind. Der erste Rollensatz ist in dem ersten Mutterteil und der zweite Rollensatz ist in dem zweiten Mutterteil angeordnet. Die Rollen des ersten Rollensatzes können an der einen Gewindeflanke der Gewindenut der Gewindespindel und die Rollen des zweiten Rollensatzes können an der anderen Gewindeflanke der Gewindenut der Gewindespindel abwälzen. Ein die beiden Mutterteile in axialen Abstand haltenden Abstandhalter kann vorgesehen sein, der ein axiales Abstandmaß festlegt, das so bemessen ist, dass die Mutterteile der Spindelmutter in Vorspannung mit der Gewindespindel gehalten sind.

Auf diese Weise ist der Rollengewindetrieb spielfrei ausgeführt.

Bei einem besonders bevorzugten Rollengewindetrieb stehen die beiden Gewindeflanken der Gewindenuten rechtwinkelig aufeinander, wobei der Teilbetrag der Teilung, um den die beiden Gewindenuten der Spindelmutter und der Gewindespindel zueinander versetzt sind etwa 30 %, vorzugsweise 28 % des Betrages der Teilung entspricht.

Nachstehend wird die Erfindung anhand eines in zwei Figuren auf abgebildeten Ausführungsbeispieles näher erläutert. Es zeigen:
- Figur 1: einen Längsschnitt durch einen erfindungsgemäßen Rollengewindetrieb und
- Figur 2: eine Einzelheit des Rollengewindetriebs aus Figur 1 in vergrößerter Darstellung.

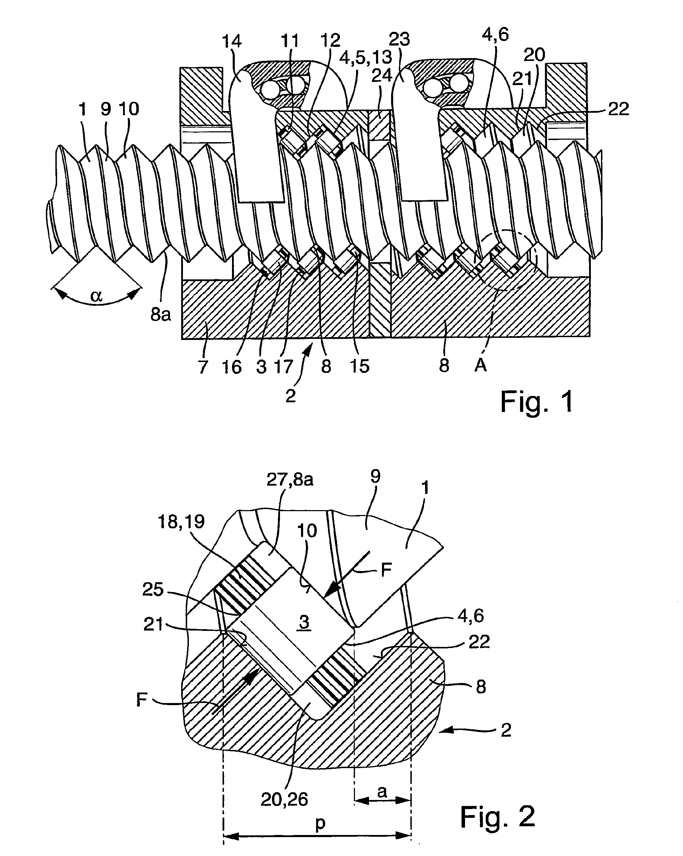

Figur 1 zeigt im Längsschnitt einen erfindungsgemäßen Rollengewindetrieb, mit einer auf einer Gewindespindel 1 drehbar angeordneten Spindelmutter 2. Rollen 3 sind in einer Gewindebahn 4 abrollbar angeordnet. Vorliegend ist die Gewindebahn 4 in eine erste Gewindebahn 5 und in eine zweite Gewindebahn 6 unterteilt.

Die Spindelmutter 2 ist vorliegend zweiteilig ausgeführt und umfasst ein erstes Mutterteil 7 und ein zweites Mutterteil 8. Die beiden Mutterteile 7, 8 sind axial hintereinander angeordnet, wobei eine Teilungsebene quer zur Drehachse des Rollengewindetriebes angeordnet ist.

Die erste Gewindebahn 5 ist gebildet von einer an der Gewindespindel 1 gebildeten Gewindenut 8a, die von zwei Gewindeflanken 9, 10 begrenzt ist. Die Gewindeflanken 9 und 10 stehen rechtwinklig aufeinander. Ferner weist die erste Gewindebahn 5 eine an dem ersten Mutterteil 7 vorgesehene Gewindenut 11 auf. Die Gewindenut 11 ist begrenzt durch Gewindeflanken 12, 13.

Die zwischen dem ersten Mutterteil 7 und der Gewindespindel 1 angeordnete Rollen 3 bilden einen ersten Rollensatz, der endlos umläuft. Zu diesem Zweck ist ein an sich bekannter Umlenkkanal 14 vorgesehen, in dem der erste Rollensatz von einem Ende der ersten Gewindebahn 5 zu einem Anfang der ersten Gewindebahn 5 umgelenkt werden. Im vorliegenden Fall ist der Umlenkkanal 14 außerhalb des ersten Mutterteiles 7 angeordnet.

Der erste Rollensatz umfasst einen Käfig 15 zum Führen der Rollen 3. Der Käfig 15 weist Taschen 16 auf, in denen die Rollen 3 angeordnet sind. Der Käfig 15 weist Gurte 17 auf, und diese Gurte 17 miteinander verbindende Stege, die hier nicht weiter abgebildet sind. Die Gurte 17 sind zueinander beabstandet angeordnet und spannen eine Ebene auf, wobei die Rotationsachsen der Rollen 3 parallel zu dieser Ebene und quer zu den Gurten 17 angeordnet sind.

Zwischen dem zweiten Mutterteil 8 und der Gewindespindel 1 ist ein zweiter Rollensatz angeordnet. Dieser zweiter Rollensatz weist ebenfalls einen Käfig 18 auf, mit Gurten 19 und Stegen. Das zweite Mutterteil 8 weist eine Gewindenut 20 auf, die von senkrecht aufeinander stehenden Gewindeflanken 21, 22 begrenzt ist. Ebenso wie bei dem ersten Mutterteil 7 ist auch bei dem zweiten Mutterteil 8 ein Umlenkkanal 23 vorgesehen.

Zwischen den beiden Mutterteilen 7, 8 ist ein Abstandhalter 24 angeordnet, der die beiden Mutterteile 7, 8 in axialen Abstand zueinander hält.

Figur 2 zeigt in vergrößerter Darstellung ein mit einem Kreis umschriebenes Detail A aus Figur 1, wobei hier die Gewindespindel 1 das zweite Mutterteil 8 und der zwischen der Gewindespindel 1, und dem zweiten Mutterteil 8 angeordnete zweite Rollensatz dargestellt sind.

In der vergrößerten Abbildung gemäß Figur 2 ist deutlich die Gewindenut 20 des zweiten Mutterteils 8 zu erkennen, wobei die Gewindenut 20 von den Gewindeflanken 21, 22 begrenzt ist. Die Rollen 3 wälzen mit ihrem Umfang an der Gewindeflanke 21 des zweiten Mutterteils 8 und an der Gewindeflanke 10 der Gewindespindel 1 ab.

Ebenso wie bei dem ersten Rollensatz weist der Käfig 18 des zweiten Rollensatzes Taschen 25 für die Rollen auf. Der Käfig 18 weist zwei zueinander beabstandet angeordnete Gurte 19 auf, die eine Ebene aufspannen zu der die Drehachse der Rollen 3 parallel angeordnet ist. Die Drehachsen der Rollen 3 sind quer zu diesen Gurten 19 angeordnet.

Der Figur 2 ist zu entnehmen, dass die Rollen 3 mit ihrer Mantelfläche an der Gewindeflanke 10 der Gewindespindel 1 und an der gegenüberliegenden Gewindeflanken 21 des zweiten Mutterteils 8 abwälzen.

Der Figur 2 ist deutlich zu entnehmen, dass die Gewindeflanken 10, 21 im Längsschnitt gesehen länger sind als die Rollen 3. Auf diese Weise entsteht in der Gewindenut 20 ein Freiraum 26 und in der Gewindenut 8a ein Freiraum 27. Dieser so gebildete Freiraum 26, 27 dient zum einen der Aufnahme und Führung der Gurte 19 des Käfigs 18 und zum anderen als Schmiermittelreservoir. Gegenüber dem bekannten Rollengewindetrieb kann bei dem erfindungsgemäßen Rollengewindetrieb deutlich mehr Schmiermittel untergebracht werden, so daß die Schmierintervalle deutlich verlängert sind.

Der Figur 2 ist ferner zu entnehmen, dass die Gewindenut 8a des zweiten Mutterteils 8 eine Steigung p aufweist. Die Gewindespindel 1 hat die gleiche Teile p. Figur 2 zeigt ferner, dass die Gewindenut 8a der Gewindespindel 1 und die Gewindenut 20 des zweiten Mutterteils 2 axial um den Betrag a zueinander versetzt angeordnet sind. Dieser Betrag a ist ein Teilbetrag der Teilung p. Wenn wie vorliegend die Gewindefanken 21, 22 der Gewindenut 20 und die Gewindeflanken 9, 10 der Gewindespindel 1 rechtwinklig zueinander angeordnet sind, ist es besonders vorteilhaft, wenn der Teilbetrag a etwa 30 % vorzugsweise 28 % der Teilung p entspricht. Bei dieser Bemessung stellen sich besonders günstige Bedingungen zur Ausbildung des erfindungsgemäßen Freiraumes ein, der sowohl als Schmiermittelreservoir, als auch als Käfigaufnahme dient.

Vorliegend beträgt die Teilung p 10 mm, der Rollendurchmesser 5 mm und der Nenndurchmesser der Gewindespindel 1 32 mm. Bei dieser Anordnung ist es ideal, wenn der Teilbetrag a 2,8 mm beträgt.

Übereinstimmende Verhältnisse sind bei dem ersten Mutterteil 7 verwirklicht.

### Bezugszeichenliste

- 1: Gewindespindel
- 2: Spindelmutter
- 3: Rolle
- 4: Gewindebahn
- 5: erste Gewindebahn
- 6: zweite Gewindebahn
- 7: erstes Mutterteil
- 8: zweites Mutterteil
- 8a: Gewindenut
- 9: Gewindeflanke
- 10: Gewindeflanke
- 11: Gewindenut
- 12: Gewindeflanke
- 13: Gewindeflanke
- 14: Umlenkkanal
- 15: Käfig
- 16: Tasche
- 17: Gurt
- 18: Käfig
- 19: Gurt
- 20: Gewindenut
- 21: Gewindeflanke
- 22: Gewindeflanke
- 23: Umlenkkanal
- 24: Abstandhalter
- 25: Tasche
- 26: Freiraum
- 27: Freiraum

## Patentansprüche

1. Rollengewindetrieb, mit einer auf einer Gewindespindel (1) angeordneten Spindelmutter (2), sowie mit Rollen (3), die in einer Gewindebahn (4) abrollbar angeordnet sind, wobei die Gewindebahn (4) von an der Gewindespindel (1) und an der Spindelmutter (2) vorgesehenen Gewindenuten (8a, 11, 20) gebildet ist, welche Gewindenuten (8a, 11, 20) jeweils von zwei Gewindeflanken (9, 10, 12, 13, 21, 22) begrenzt sind, wobei die Rollen (3) an einander zugewandten Gewindeflanken (9, 10, 12, 13, 21, 22) beider Gewindenuten (8, 11, 20) abrollbar angeordnet sind, und wobei ein aus Rollen (3) gebildeter erster Rollensatz in einer ersten Gewindebahn (5) und ein zweiter Rollensatz in einer zweiten Gewindebahn (6) abwälzbar angeordnet sind, und wobei die Drehachsen der Rollen (3) des ersten Rollensatzes winklig zu den Drehachsen der Rollen (3) des zweiten Rollensatzes angeordnet sind, und wobei Rollen (3) des ersten Rollensatzes an der einen Gewindeflanke (9) der Gewindenut (8a) der Gewindespindel (1) und die Rollen (3) des zweiten Rollensatzes an der anderen Gewindeflanke (10) der Gewindenut (8a) der Gewindespindel (1) abwälzbar angeordnet sind, **dadurch gekennzeichnet daß** die Gewindeflanken (9, 10, 12, 13, 21, 22) länger als die Rollen (3) ausgebildet sind, wobei zwischen Stirnseiten der Rollen und diesen Stirnseiten gegenüberliegenden Gewindeflanken (9, 10, 12, 13, 21, 22) ein Freiraum (26, 27) gebildet ist.

2. Rollengewindetrieb nach Anspruch 1, bei dem der Freiraum (26, 27) als Schmiermittel reservoir ausgebildet ist.

3. Rollengewindetrieb nach Anspruch 1 oder 2, bei dem ein Käfig (15, 18) zum Führen der Rollen vorgesehen ist, in dessen Taschen (16, 25) Rollen (3) aufgenommen sind, wobei der Käfig (15, 18) Gurte (17, 19) und diese Gurte (17, 19) miteinander verbindende Stege aufweist, wobei die Gurte (17, 19) in dem Freiraum (26, 27) angeordnet sind.

4. Rollengewindetrieb nach Anspruch 3, bei dem die beabstandet zueinander angeordneten Gurte (17, 19) eine Ebene aufspannen, wobei die Rotationsachen der Rollen (3) parallel zu der Ebene und quer zu den Gurten (17, 19) angeordnet sind.

5. Rollengewindetrieb nach Anspruch 3, bei dem die Stege und der Freiraum (26, 27) um die Drehachse des Rollengewindetriebes herum schraubenförmig gewunden sind.

6. Rollengewindetrieb nach Anspruch 1, bei dem die Spindelmutter (2) zwei axial hintereinander angeordnete erste und zweite Mutterteile (7, 8) aufweist, wobei der erste Rollensatz in dem ersten Mutterteil (7) und der zweite Rollensatz in dem zweiten Mutterteil (8) angeordnet ist.

7. Rollengewindetrieb nach Anspruch 6, bei dem ein die beiden Mutterteile (7, 8) in axialem Abstand zueinander haltender Abstandhalter (24) vorgesehen ist, der ein axiales Abstandmaß festlegt, das gerade so bemessen ist, daß die Mutterteile (7, 8) in Vorspannung mit der Gewindespindel (1) gehalten sind.

8. Rollengewindetrieb nach Anspruch 1, bei dem die beiden Gewindeflanken (9, 10, 12, 13, 21, 22) der Gewindenut (8a, 11, 20) rechtwinklig aufeinander stehen, wobei der Teilbetrag (a) etwa 30 Prozent, vorzugsweise 28 Prozent des Betrages der Teilung (p) entspricht.

9. Rollengewindetrieb nach Anspruch 1, bei dem beide gleich große Teilungen (p) der Gewindenuten (8, 11, 20) axial um einen Teilbetrag (a) der Teilung (p) zueinander versetzt angeordnet sind.

## Claims

1. Roller screw drive having a spindle nut (2) arranged on a threaded spindle (1), and having rollers (3) which are arranged such that they can roll in a thread path (4), the thread path (4) being formed by thread grooves (8a, 11, 20) provided on the threaded spindle (1) and on the spindle nut (2), which thread grooves (8a, 11, 20) are each delimited by two thread flanks (9, 10, 12, 13, 21, 22), the rollers (3) rolling on thread flanks (9, 10, 12, 13, 21, 22), which face one another, of the two thread grooves (8a, 11, 20), a first roller set formed from rollers (3) being arranged such that it can roll in a first thread path (5), and a second roller set being arranged such that it can roll in a second thread path (6), the rotational axes of the rollers (3) of the first roller set being arranged at an angle to the rotational axes of the rollers (3) of the second roller set, and rollers (3) of the first roller set being arranged such that they can roll on one thread flank (9) of the thread groove (8a) of the threaded spindle (1), and the rollers (3) of the second roller set being arranged such that they can roll on the other thread flank (10) of the thread groove (8a) of the threaded spindle (1),
**characterized in that** the thread flanks (9, 10, 12, 13, 21, 22) are longer than the rollers (3), a free space (26, 27) being formed between end sides of the rollers and thread flanks (9, 10, 12, 13, 21, 22) situated opposite said end sides.

2. Roller screw drive according to Claim 2, in which the free space (26, 27) is formed as a lubricant reservoir.

3. Roller screw drive according to Claim 1 or 2, in which a cage (15, 18) is provided for guiding the rollers, rollers (3) being held in the pockets (16, 25) of said cage (15, 18), the cage (15, 18) having belts (17, 19) and said belts (17, 19) having webs connecting them to one another, the belts (17, 19) being arranged in the free space (26, 27).

4. Roller screw drive according to Claim 3, in which the belts (17, 19), which are arranged at a distance from one another, span one plane, the rotational axes of the rollers (3) being arranged parallel to the plane and transversely with respect to belts (17, 19).

5. Roller screw drive according to Claim 3, in which the webs and the free space (26, 27) loop around the rotational axis of the roller screw drive in the manner of a screw.

6. Roller screw drive according to Claim 1, in which the spindle nut (2) has two first and second nut parts (7, 8) arranged one behind the other axially, the first roller set being arranged in the first nut part (7) and the second roller set being arranged in the second nut part (8).

7. Roller screw drive according to Claim 6, in which a spacer (24) is provided which keeps the two nut parts (7, 8) at an axial distance from one another and defines an axial distance dimension which is such that the nut parts (7, 8) are kept in a prestressed state with the threaded spindle (1).

8. Roller screw drive according to Claim 1, in which the two thread flanks (9, 10, 12, 13, 21, 22) of the thread groove (8a, 11, 20) are perpendicular to one another, the partial amount (a) corresponding to approximately 30%, preferably 28%, of the absolute value of the pitch (p).

9. Roller screw drive according to Claim 1, in which the two equal pitches (p) of the thread grooves (8a, 11, 20) are arranged so as to be axially offset with respect to one another by a partial amount (a) of the pitch (p).

## Revendications

1. Vis d'entraînement à galets, comprenant un écrou de broche (2) disposé sur une broche filetée (1), ainsi que des galets (3) qui sont disposés de manière à pouvoir rouler dans une piste de filetage (4), la piste de filetage (4) étant formée par des rainures de filetage (8a, 11, 20) prévues sur la broche filetée (1) et sur l'écrou fileté (2), ces rainures de filetage (8a, 11, 20) étant à chaque fois limitées par deux flancs de filetage (9, 10, 12, 13, 21, 22), les galets (3) étant disposés de manière à pouvoir rouler sur des flancs de filetage tournés l'un vers l'autre (9, 10, 12, 13, 21, 22) des deux rainures de filetage (8a, 11, 20), et un premier jeu de galets formé des galets (3) étant disposé dans une première piste de filetage (5) et un deuxième jeu de galets étant disposé dans une deuxième piste de filetage (6) de manière à pouvoir rouler, et les axes de rotation des galets (3) du premier jeu de galets étant disposés suivant un certain angle par rapport aux axes de rotation des galets (3) du deuxième jeu de galets, et les galets (3) du premier jeu de galets étant disposés sur l'un des flancs de filetage (9) de la rainure de filetage (8a) de la broche filetée (1) et les galets (3) du deuxième jeu de galets étant disposés sur l'autre flanc de filetage (10) de la rainure de filetage (8a) de la broche filetée (1), de manière à pouvoir rouler, **caractérisée en ce que** les flancs de filetage (9, 10, 12, 13, 21, 22) sont plus longs que les galets (3), et un espace libre (26, 27) est formé entre des côtés frontaux des galets et les flancs de filetage (9, 10, 12, 13, 21, 22) opposés à ces côtés frontaux.

2. Vis d'entraînement à galets selon la revendication 1, dans laquelle l'espace libre (26, 27) est réalisé sous forme de réservoir de lubrifiant.

3. Vis d'entraînement à galets selon la revendication 1 ou 2, dans laquelle une cage (15, 18) est prévue pour guider les galets, les galets (3) étant reçus dans les cavités (16, 25) de la cage, la cage (15, 18) présentant des sangles (17, 19) et des nervures reliant ensemble ces sangles (17, 19), les sangles (17, 19) étant disposées dans l'espace libre (26, 27).

4. Vis d'entraînement à galets selon la revendication 3, dans laquelle les sangles (17, 19) espacées l'une de l'autre tendent un plan et les axes de rotation des galets (3) sont disposés parallèlement au plan et transversalement aux sangles (17, 19).

5. vis d'entraînement à galets selon la revendication 3, dans laquelle les nervures et l'espace libre (26, 27) sont enroulés en forme d'hélice autour de l'axe de rotation de la vis d'entraînement à galets.

6. Vis d'entraînement à galets selon la revendication 1, dans laquelle l'écrou de broche (2) présente deux première et deuxième parties d'écrou (7, 8) disposées axialement l'une derrière l'autre, le premier jeu de galets étant disposé dans la première partie d'écrou (7) et le deuxième jeu de galets étant disposé dans la deuxième partie d'écrou (8).

7. Vis d'entraînement à galets selon la revendication 6, dans laquelle un élément d'espacement (24) retenant les deux parties d'écrou (7, 8) à distance axiale l'une de l'autre est prévu, lequel établit une distance axiale qui est dimensionnée de telle sorte que les parties d'écrou (7, 8) soient maintenues précontraintes avec la broche filetée (1).

8. vis d'entraînement à galets selon la revendication 1, dans laquelle les deux flancs de filetage (9, 10, 12, 13, 21, 22) de la rainure de filetage (8a, 11, 20) sont orientés à angle droit l'un par rapport à l'autre, la valeur partielle (a) représentant environ 30 pour cent, de préférence 28 pour cent de la valeur de la division (p).

9. Vis d'entraînement à galets selon la revendication 1, dans laquelle les deux divisions de même taille (p) des rainures de filetage (8a, 11, 20) sont disposées de manière décalée axialement l'une par rapport à l'autre d'une valeur partielle (a) de la division (p).
